# EUROPÄISCHE PATENTANMELDUNG

(11) **EP 2 362 030 A2**
(43) Veröffentlichungstag der Anmeldung: **31.08.2011**
(21) Anmeldenummer: 11001205.1
(22) Anmeldetag: 15.02.2011
(51) Int. Cl.: E04B 1/84

(54) **Schalldämmelement**

(30) Priorität: 22.02.2010 DE 202010002625 U
(71) Anmelder: SCHÖCK BAUTEILE GmbH, 76534 Baden-Baden (DE)
(72) Erfinder:
(74) Vertreter: Lemcke, Brommer & Partner

(57) **Zusammenfassung**

Schalldämmelement zur Schallentkopplung im Bereich von Gebäudewänden zumindest bestehend aus einem schalldämmenden insbesondere mattenförmigen Isolierelement, wobei das Schalldämmelement dazu dient, mit horizontaler Erstreckung in der Ebene der Gebäudewand eingebaut zu werden und hierzu insbesondere eine im wesentlichen der Abmessung der Gebäudewand in Wanddickenrichtung entsprechende Breite aufweist, wobei das Schalldämmelement zumindest ein das Isolierelement großflächig beaufschlagendes Armierungselement aufweist.

## Beschreibung

Die Erfindung betrifft ein Schalldämmelement zur Schallentkopplung im Bereich von Gebäudewänden, zumindest bestehend aus einem schalldämmenden insbesondere mattenförmigen Isolierelement, wobei das Schalldämmelement dazu dient, mit horizontaler Erstreckung in der Ebene der Gebäudewand eingebaut zu werden und hierzu insbesondere eine im Wesentlichen der Abmessung der Gebäudewanddicke entsprechende Breite aufweist.

Soweit im Zusammenhang mit dieser Erfindung von Gebäudewänden die Rede ist, so sei darunter in für derartige Schalldämmelemente üblichen Weise der Einbau im Bereich des Wandfußes oder Wandkopfes oder ein davon entfernter Bereich in einem beliebigen Wandabschnitt gemeint. Dort werden auch bisher schon die eingangs genannten Schalldämmelemente als so genanntes Wandlager eingebaut. Hierzu wird zunächst auf den gewünschten Abschnitt der Gebäudewand und so zum Beispiel auf der Rohdecke, der Deckenwanddämmung oder Deckenrandabmauerung eine planebene Lagerfläche dadurch hergestellt, dass eine Mörtel-Ausgleichsschicht aufgebracht wird; unter Verwendung eines Dünnbettmörtels wird das Schalldämmelement so aufgelegt, dass es bündig mit der Außenkante des Mauerwerks abschließt. Unter Zwischenfügung einer weiteren Dünnbettmörtelschicht wird der entsprechende vertikal darüber anzuordnende Gebäudewandabschnitt erstellt, so zum Beispiel ein Planziegelmauerwerk errichtet. An der Wandinnenseite sollte das Schalldämmelement etwas gegenüber der Wandfläche überstehen und nicht überputzt werden. Ein solches Schalldämmelement ist unter der Bezeichnung "Schöck Tromur" bekannt und hat sich seit Jahren in der Praxis bewährt.

Das Schalldämmelement erhält seine Schalldämmeigenschaften durch das elastisch nachgiebige Isoliermaterial, das beispielsweise aus Polyurethan-gebundenen Gummigranulaten besteht und das selbst bei dem Einbau mit vier darüber angeordneten Gebäude-Folgeschossen dazu in der Lage ist, die Schallschwingungen entsprechend abzuschwächen bzw. zu reduzieren, um die vertikale Weiterleitung über die von dem Schalldämmelement gebildete Ebene hinaus im größtmöglichen Maße einzudämmen.

Der vorliegenden Erfindung liegt nunmehr die Aufgabe zugrunde, dieses bekannte Schalldämmelement weiter zu entwickeln und insbesondere dessen Gebrauchseigenschaften zu verbessern.

Diese Aufgabe wird erfindungsgemäß dadurch gelöst, dass bei einem Schalldämmelement der eingangs genannten Art das Schalldämmelement zumindest ein das Isolierelement großflächig beaufschlagendes Armierungselement aufweist. Dieses Armierungselement soll sich dabei über wesentliche Teilbereiche und insbesondere zumindest über einen Großteil der horizontalen Breite des Schalldämmelements erstrecken und so zur Reduzierung horizontaler Abmessungsänderungen des Isolierelements und insbesondere zur Behinderung der oberflächlichen Querdehnung des Isolierelements beitragen.

Diesen erfindungswesentlichen Maßnahmen liegt die Erkenntnis zugrunde, dass das Schalldämmelement bei vertikaler Druckbeaufschlagung, nämlich bei Aufnahme der Gewichtskräfte durch die über dem Schalldämmelement anzuordnenden Gebäudewandabschnitte dazu neigt, in Vertikalrichtung elastisch nachzugeben. Dies geht aufgrund des nicht vollkommen kompressiblen Isolierelementmaterials automatisch mit einem Ausweichen der verdrängten Bereiche des Isolierelements in horizontaler Richtung einher. Dies erfolgt zwar nur in reduziertem Maße, kann aber in manchen Fällen dazu führen, dass die auf dem Schalldämmelement ruhenden Gebäudewandabschnitte, also beispielsweise Mauerziegel dieser horizontalen Ausweichbewegung nicht zerstörungsfrei folgen können, sondern dies nur über eine plastische Nachgiebigkeit, also vor allem durch Ausbildung vertikaler Risse schaffen.

Das erfindungsgemäße Armierungselement hat nun den Vorteil, dass es dieses horizontale Ausweichen des Schalldämmelements reduziert bzw. nach Möglichkeit ganz unterbindet, so dass die Druckbeaufschlagung des Schalldämmelements in Folge der Gewichtskräfte der Gebäudewandabschnitte nur zu einer vertikalen Nachgiebigkeit führt, jedoch nicht mehr in eine horizontale Querdehnung umgesetzt wird.

Hinsichtlich der Ausgestaltung des Armierungselements gibt es eine größere Anzahl an Möglichkeiten: So kann dieses insbesondere gewebe-, folien- oder gitterartig ausgebildet sein und hierbei beispielsweise in das Isolierelement eingebettet sein und/oder dieses flächig beaufschlagen. Dabei kommt es vor allem darauf an, dass die dem "zu schonenden" Gebäudewandabschnitt zugewandte Oberfläche das Schalldämmelement eine entsprechende Bewegungsbehinderung erhält; d.h. so lange einigermaßen sichergestellt ist, dass die dem Gebäudewandabschnitt zugewandte Oberfläche des Schalldämmelements den Gebäudewandabschnitt keinen Querdehnungen unterwirft, es also nicht bei horizontalen Bewegungen mitnimmt, kann theoretisch in einem weiter darunter liegenden Bereich des Schalldämmelements dennoch eine horizontale Ausdehnung des Isolierelements erfolgen, die dann keine Rissbildung zur Folge hätte.

Hier ist ebenso denkbar, dass das Armierungselement wannenartig ausgebildet ist und so eine Bewegungsbeschränkung des Schalldämmelements durch entsprechende Formvorgaben gewährleistet, der angrenzende Gebäudewandabschnitt also gar nicht in Horizontalrichtung mitgenommen werden kann, da sich das Schalldämmelement selbst bei größter Druckbeaufschlagung nicht über die Wanne des Armierungselements in Horizontalrichtung ausdehnen kann.

Ein alternativer Lösungsweg ist darin zu sehen, dass die Querdehnung des Schalldämmelements von der Querdehnung des angrenzenden Gebäudewandabschnittes entkoppelt wird, was beispielsweise durch in ein in Sandwichbauweise aufgebautes Gleitschicht-Schalldämmelement ermöglicht werden kann, wobei dann das Armierungselement zumindest mit ihrer formstabilen oberen, vom angrenzenden Gebäudewandabschnitt beaufschlagten Fläche, an diesem Gebäudewandabschnitt verbleibt und sich das Isolierelement demgegenüber in Horizontalrichtung bewegen kann, ohne dass es hierbei den angrenzenden Gebäudewandabschnitt mitnehmen würde und hierbei Risse in den Gebäudewandabschnitt verursachen könnte. Bei einem solchen in Sandwichbauweise aufgebautes Gleitschicht-Schalldämmelement muss allerdings dafür Sorge getragen werden, dass die Gebäudewand aufgrund der Horizontalverschieblichkeit nicht aus der Solllage verschoben werden kann, sondern positionstreu gelagert ist. Zweckmäßiger Weise erstreckt sich das Armierungselement im Wesentlichen parallel zur und/oder in der Ebene des Isolierelements, um so die gewünschten Armierungs- bzw. Bewehrungsaufgaben möglichst großflächig zu erfüllen.

Was das Isolierelement betrifft, so empfiehlt es sich, dass dieses in der an sich bekannten Weise aus elastisch nachgiebigem Material, insbesondere aus gummiartigem Material und besonders bevorzugt aus polyurethan-gebundenen Gummigranulaten, besteht.

Hinsichtlich des Materials des Armierungselementes sind vor allem Stahl(faser)gewebe empfehlenswert, jedoch können auch viele andere Materialien in Faser-, Stangen- oder Folienform Anwendung finden, die eine entsprechende Formstabilität in Zugrichtung aufweisen.

Was schließlich das mattenförmige Schalldämmelement betrifft, so kann dieses als Bahnenware in Rollenform zur Verfügung gestellt werden mit auf den zu erstellenden Gebäudewandabschnitt angepassten Abmessungen.

Weitere Merkmale und Vorteile der vorliegenden Erfindung ergeben sich aus den beigefügten Ansprüchen und aus der nachfolgenden Beschreibung von Ausführungsbeispielen anhand der Zeichnung; hierbei zeigen
- Figur 1: einen Vertikalschnitt durch eine Gebäudewand, die zwei mögliche Einbauorte des erfindungsgemäßen Schalldämmelements zeigt;
- Figur 2: einen weiteren Vertikalschnitt durch ein Gebäude mit weiteren Einbauorten des erfindungsgemäßen Schalldämmelements;
- Figur 3: in perspektivischer Seitenansicht das erfindungsgemäß Schalldämmelement; und
- Figur 4: einen vertikalen Längsschnitt durch das erfindungsgemäße Schalldämmelement aus Figur 3.

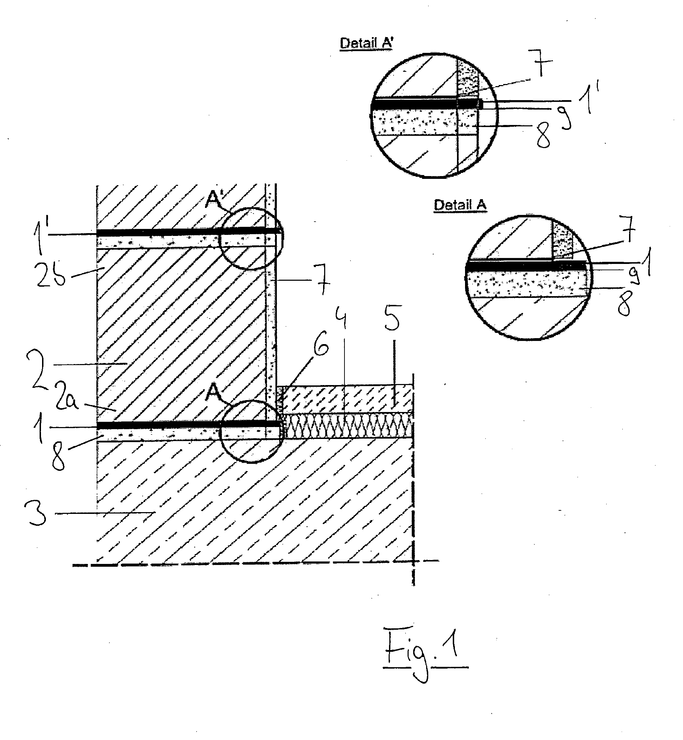

Figur 1 zeigt im Vertikalschnitt eine Einbausituation eines erfindungsgemäßen Schalldämmelements 1 sowie eine weitere Einbausituation eines weiteren erfindungsgemäßen Schalldämmelements 1' im Bereich einer Gebäudewand 2, die auf einer Gebäudedecke 3 aufgelagert ist. Im Falle des Schalldämmelements 1 ist dieses im Wandfußbereich 2a, am Übergang zwischen Gebäudewand 2 und Gebäudedecke 3 angeordnet und dient dazu, die Schallübertragung zwischen Gebäudedecke 3 und Gebäudewand 2 zu reduzieren bzw. zu dämmen. Auf der Gebäudedecke 3 sind im Bereich der Innenseite des Gebäudes beispielhafte Aufbauten wie Trittschalldämmung 4 und Estrich 5 angeordnet und zusätzlich stirnseitig am Estrich 5 ein Dämmstreifen 6, der den Estrich von der Gebäudewand 2 bzw. einem dort aufgebrachten Innenputz 7 trennt.

Wie aus der Ansicht Detail A in Figur 1 ersichtlich ist, ist auf die Gebäudedecke 3 eine Ausgleichsschicht 8 aufgebracht, um eine planebene Lagerfläche für das erfindungsgemäße Schalldämmelement 1 zur Verfügung zu stellen. Das Schalldämmelement 1 wird nun im vorliegenden Beispiel unter vorherigem Auftrag eines Dünnbettmörtels 9 auf die abgebundene Ausgleichsschicht 8 im Gebäudewandbereich aufgelegt, wobei es auf der Gebäudeaußenseite bündig mit der Gebäudeaußenwand abschließt (die Gebäudeaußenseite ist in Figur 1 links dargestellt, während die Gebäudeinnenseite in Figur 1 die rechte Seite der Gebäudewand 2 bildet), während das Schalldämmelement auf der Gebäudeinnenseite etwas gegenüber der Gebäudeinnenwand vorsteht, wie insbesondere aus Detail A aus Figur 1 ersichtlich ist.

Nach Auftrag einer weiteren Dünnbettmörtelschicht wird auf das Schalldämmelement 1 das Gebäudewandelement 2 aufgestellt, im vorliegenden Fall beispielsweise ein ziegelförmiger Mauerstein 2. Aus Figur 1 und insbesondere aus Detail A ist ersichtlich, dass das erfindungsgemäße Schalldämmelement den Mauerstein 2 von der Ausgleichsschicht 8 und der Gebäudedecke 3 trennt und so für eine entsprechende Schallentkoppelung sorgen kann.

Figur 1 zeigt in einem oberen Abschnitt der Gebäudewand 2 eine alternative Einbausituation eines weiteren Schalldämmelements 1', um zu verdeutlichen, dass dieses Schalldämmelement nicht nur am Wandfuß 2a, sondern auch in einem mittleren Wandabschnitt 2b angeordnet sein kann. Detail A' zeigt die Einbausituation des Schalldämmelements 1' genauer und lässt wieder den Einbau mit einem gewissen Überstand auf der Gebäudeinnenseite im Vergleich zur Gebäudewand bzw. den dort aufgebrachten Innenputz 7 erkennen.

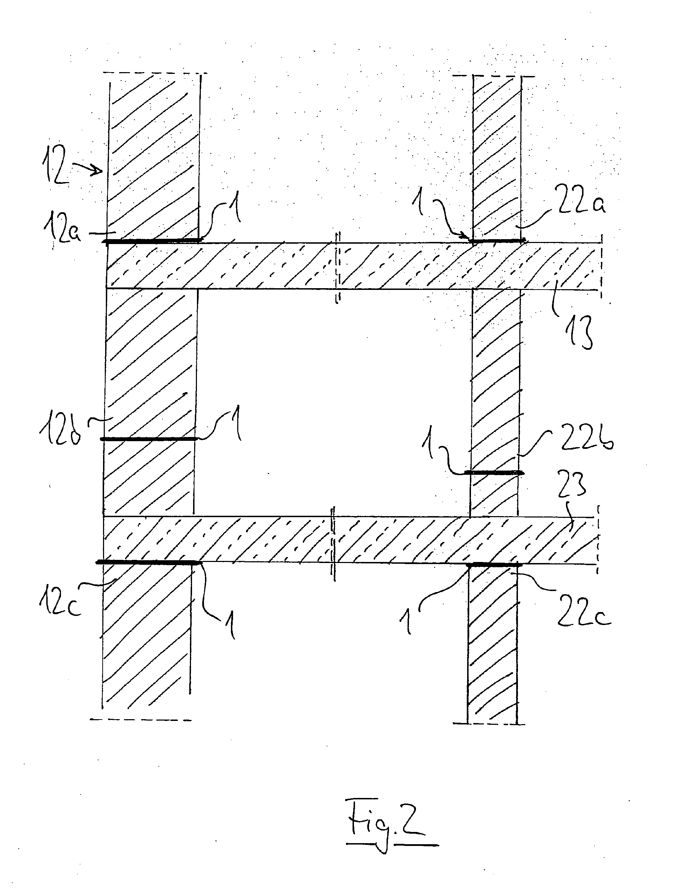

In Figur 2 sind weitere mögliche Einbaupositionen eines Schalldämmelements 1 dargestellt und zwar im Bereich eines Wandfußes 12a einer Außenwand 12 (siehe in Figur 1 oben links), im Bereich eines Wandfußes 22a einer Gebäudeinnenwand 22 (siehe in Figur 2 oben rechts), wobei das erfindungsgemäße Schalldämmelement 1 in beiden Beispielfällen jeweils auf einer Gebäudedecke 13 aufgelagert ist. In Figur 2 unten sind zwei Schalldämmelemente 1 im Bereich eines Wandkopfes 12c der Gebäudeaußenwand 12 angeordnet (siehe in Figur 2 unten links) bzw. im Bereich des Wandkopfes 22c der Gebäudeinnenwand 22 (siehe in Figur 2 unten rechts), wobei diese eine Gebäudedecke 23 von der Gebäudewand 22 bzw. 12 trennen und schalltechnisch entkoppeln.

Schließlich ist in Figur 2 im mittleren Bereich die bereits in Figur 1 angedeutete Verwendung eines erfindungsgemäßen Schalldämmelements 1 in einem mittleren Wandabschnitt 22b bzw. 12b dargestellt, um dort eine schalltechnische Entkopplung zwischen den oben bzw. unten angrenzenden Gebäudewandteilen zu bewirken.

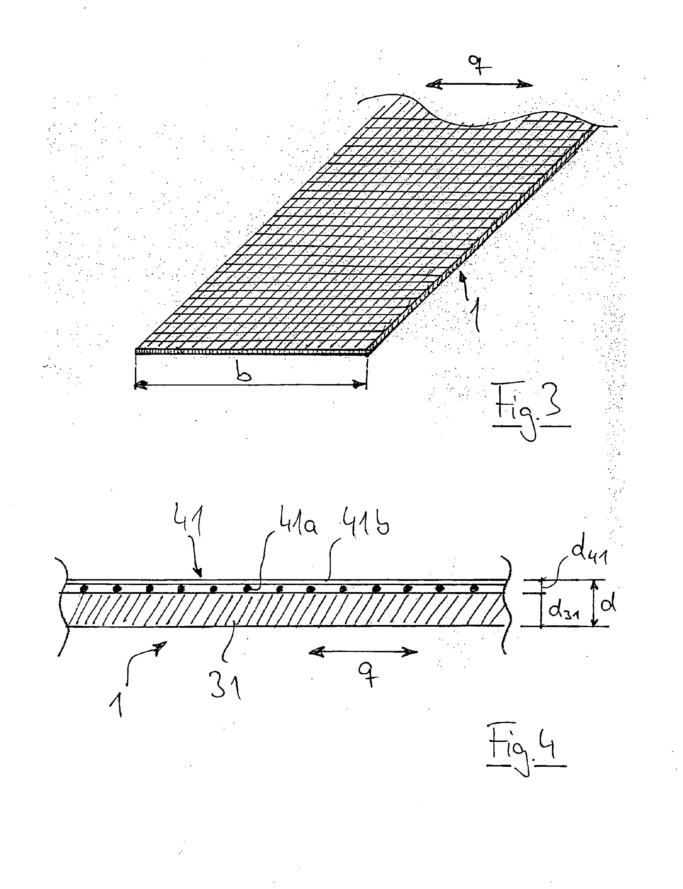

Figur 3 zeigt schließlich zusammen mit Figur 4 das erfindungsgemäße Schalldämmelement 1 genauer und verdeutlicht den Aufbau aus einem unteren mattenartigen Isolierelement 31, das aus polyurethan-gebundenen Gummigranulaten besteht, und aus einem flächig darauf angeordneten gitterartigen Armierungselement 41 aus Längsfasern 41 a und Querfasern 41 b. Vor allem diese Querfasern 41 b sollen die Hauptfunktion des Armierungselements 41 erfüllen, indem sie eine Querdehnung des Schalldämmelements 1 bzw. des Isolierelements 31 in Querrichtung q (siehe Figuren 3 und 4) verhindern. Dazu sind die Querfasern 41 b innerhalb des Armierungsgitters 41 mit den Längsfasern 41 a fest verbunden und wiederum diese Längsfasern 41 a sind durch geeignete Maßnahmen wie Aufvulkanisieren, Kleben, Einbetten oder dergleichen mit dem Isolierelement 31 fest verbunden.

Wird nun auf das Schalldämmelement 1 von oben (bezogen auf Figur 3 und 4 und bezogen auf den Einbau- und Anwendungsfall) ein Gebäudewandelement wie beispielsweise ein ziegelförmiger Mauerstein aufgestellt, so führt dies zu einer gewissen Stauchung der Dicke d des Schalldämmelements 1, die sich zusammensetzt aus der Dicke d₃₁ des Isolierelements und der Dicke d₄₁ des Armierungselements. Bei nur einem Mauerstein ist die Dickenänderung natürlich marginal, wohingegen bei größeren Wandhöhen und Gewichten und insbesondere bei einem mehrgeschossigen Aufbau die Reduzierung der Dicke d deutlich zunimmt.

Da das gummielastische Material des Isolierelements 31 bei Komprimierung in Dickenrichtung dazu neigt, seitlich auszuweichen, würde dies ohne das Armierungselement 41 zu einer Vergrößerung der horizontalen Breite b des Schalldämmelements 1 und vor allem des Isolierelements 31 führen. Dabei würde der auf das Schalldämmelement 1 aufgelegte Wandabschnitt einer Querdehnung in horizontaler Richtung unterzogen und aufgrund seines harten, spröden Wandmaterials, das keine elastische Querbewegung mitmachen kann, entsprechend nur durch Rissbildung dieser Querdehnung folgen können. Aber genau diese Querdehnung soll durch die Verwendung des erfindungsgemäßen Armierungselements 41 verhindert werden, um dadurch das Entstehen von unerwünschten Rissen in der Gebäudewand zu vermeiden.

Zusammengefasst liegt der wesentliche Vorteil der vorliegenden Erfindung darin, mit einfachen Mitteln die Qualität einer durch ein entsprechendes Wandlager zur Verfügung gestellten Schalldämmung zu verbessern, indem herkömmliche mattenartige Isolierelemente mit einer Armierung versehen sind, die eine Querdehnung des Isolierelements in Horizontalrichtung vermeiden hilft.

## Patentansprüche

1. Schalldämmelement (1, 1') zur Schallentkopplung im Bereich von Gebäudewänden (2, 12, 22), zumindest bestehend aus einem schalldämmenden insbesondere mattenförmigen Isolierelement (31), wobei das Schalldämmelement dazu dient, mit horizontaler Erstreckung in der Ebene der Gebäudewand (2, 12, 22) eingebaut zu werden und hierzu insbesondere eine im wesentlichen der Abmessung der Gebäudewand in Wanddickenrichtung entsprechende Breite (b) aufweist,
**dadurch gekennzeichnet,**
**dass** das Schalldämmelement (1, 1') zumindest ein das Isolierelement (31) großflächig beaufschlagendes Armierungselement (41) aufweist.

2. Schalldämmelement zur Schallentkopplung nach Anspruch 1,
**dadurch gekennzeichnet,**
**dass** sich das Armierungselement (41) über wesentliche Teilbereiche und insbesondere über zumindest einen Großteil der horizontalen Breite (b) des Schalldämmelements (1, 1') erstreckt und so zur Reduzierung horizontaler Abmessungsänderungen des lsolierelements (31) und insbesondere zur Behinderung der oberflächlichen Querdehnung des Isolierelements fungiert.

3. Schalldämmelement zur Schallentkopplung nach zumindest Anspruch 1,
**dadurch gekennzeichnet,**
**dass** das Armierungselement (41) gewebe-, folien- oder gitterartig ausgebildet ist.

4. Schalldämmelement zur Schallentkopplung nach zumindest Anspruch 1,
**dadurch gekennzeichnet,**
**dass** das Armierungselement (41) wannenartig ausgebildet ist.

5. Schalldämmelement zur Schallentkopplung nach zumindest Anspruch 1,
**dadurch gekennzeichnet,**
**dass** das Armierungselement (41) in das Isolierelement (31) eingebettet ist und/oder dass das Armierungselement (41) das Isolierelement (31) flächig beaufschlagt.

6. Schalldämmelement zur Schallentkopplung nach zumindest Anspruch 1,
**dadurch gekennzeichnet,**
**dass** das Armierungselement (41) so ausgebildet ist, dass es mit der Oberfläche des Isolierelements (31) zumindest in Querrichtung (q) unnachgiebig, insbesondere stoffschlüssig verbunden ist.

7. Schalldämmelement zur Schallentkopplung nach zumindest Anspruch 1,
**dadurch gekennzeichnet,**
**dass** das Armierungselement (41) so ausgebildet ist, dass es gegenüber dem Isolierelement (31) zumindest teilweise bewegungsentkoppelt ist.

8. Schalldämmelement zur Schallentkopplung nach zumindest Anspruch 1,
**dadurch gekennzeichnet,**
**dass** sich das Armierungselement (41) im wesentlichen parallel zur und/oder in der Ebene des Isolierelements (31) erstreckt.

9. Schalldämmelement zur Schallentkopplung nach zumindest Anspruch 1,
**dadurch gekennzeichnet,**
**dass** das Isolierelement (31) aus elastisch nachgiebigem Material, insbesondere aus gummiartigem Material und besonders bevorzugt aus polyurethan-gebundenen Gummigranulaten besteht.

10. Schalldämmelement zur Schallentkopplung nach zumindest Anspruch 1,
**dadurch gekennzeichnet,**
**dass** das mattenförmige Schalldämmelement (1, 1') bahnenartig mit geraden zueinander parallelen Kanten ausgebildet ist.

11. Schalldämmelement zur Schallentkopplung nach zumindest Anspruch 1,
**dadurch gekennzeichnet,**
**dass** das Armierungselement (41) gitterartig ausgebildet ist und aus miteinander verbundenen Längsfasern (41 a) und Querfasern (41 b) besteht.
